# EUROPÄISCHE PATENTSCHRIFT

(11) **EP 0 419 723 B1**
(45) Veröffentlichungstag und Bekanntmachung des Hinweises auf die Patenterteilung: **11.01.1995**
(21) Anmeldenummer: 89118082.0
(22) Anmeldetag: 29.09.1989
(51) Int. Cl.: G06F 13/10, G06F 13/24

(54) **Verfahren und Unterbrechungssteuerung zur Behandlung von Unterbrechungsanforderungen bei Ein-/Ausgabeoperationen in einem virtuellen Maschinensystem**
Method and interrupt controller for treating i/o operation interrupt requests in a virtual machine system
Méthode et commande d'interruptions pour traitement de demandes d'interruptions d'opérations d'entrée-sortie dans un système à machine virtuelle

(43) Veröffentlichungstag der Anmeldung: 03.04.1991
(73) Patentinhaber: Siemens Nixdorf Informationssysteme Aktiengesellschaft, 33102 Paderborn (DE)
(72) Erfinder: Weitzsch, Jürgen, D-8024 Deisenhofen (DE); Spreen, Hado, Dr., D-8034 Germering (DE)
(74) Vertreter: Fuchs, Franz-Josef, Dr.-Ing.

(56) Entgegenhaltungen:
- EP-A- 0 210 640
- EP-A- 0 213 952
- WO-A-82/02442
- GB-A- 1 145 806
- US-A- 4 001 783

## Beschreibung

Die Erfindung betrifft ein verfahren und eine Unterbrechungssteuerung zur Behandlung von Unterbrechungsanforderungen bei Ein-/Ausgabeoperationen in einem virtuellen Maschinensystem gemäß dem Oberbegriff der Patentansprüche 1 bzw. 9.

Virtuelle Maschinensysteme basieren bekanntlich auf einer in Hardware existierenden reellen Maschine, die in üblicher Weise aus einem Speicherwerk, einem oder mehreren Verarbeitungsprozessoren und einem Ein-/Ausgabesystem mit Ein-/Ausgabeprozessoren, Kanälen und daran angeschlossenen Geräten besteht. Die einzelnen Hardwareaggregate oder Teile davon bilden die Betriebsmittel, die durch ein übergeordnetes Steuerprogramm (Hypervisor) den einzelnen virtuellen Maschinen statisch oder dynamisch zugeordnet werden, so daß ein Betrieb mit verschiedenen Betriebssystemen auf derselben reellen Maschine möglich ist, wobei jeweils ein Betriebssystem in einer virtuellen Maschine abläuft.

Unterbrechungsanforderungen des Ein-/Ausgabesystems, die am Ende einer Ein-/Ausgabeoperation oder beim Auftreten von Fehlern ausgelöst werden, werden dabei in, den einzelnen Unterbrechungsklassen, die gleichzeitig unterschiedlichen Prioritäten entsprechen, zugeordneten Warteschlangen abgespeichert. Ein Verarbeitungsprozessor prüft anhand einer Maske nach jedem ausgeführten Makrobefehl, ob eine Unterbrechung zulässig ist und ob eine Unterbrechungsanforderung der überprüften Unterbrechungsklasse vorliegt. Sind beide Bedingungen erfüllt, wird die weitere Steuerung an den Hypervisor zur Analyse der Anforderung übergeben und, wenn zulässig, eine Unterbrechungsanforderung für die zuständige virtuelle Maschine simuliert, die dann die Steuerung zur Durchführung der Unterbrechungsbehandlungsroutine übernimmt. Die dabei durch den Hypervisor verursachte Belastung des virtuellen Maschinensystems ist erheblich und mindert entsprechend die Nutzleistung des Systems.

Bei dem durch die EP-A2-0213952 bekannten virtuellen Maschinensystem wird daher der bestehende Satz von Warteschlangen entsprechend der Anzahl der virtuellen Maschinen im System vervielfältigt und im Verarbeitungsprozessor für jede der virtuellen Maschinen das zugehörige Maskenregister vorgesehen, so daß über das jeder virtuellen Maschine zugeordnete Identitätskennzeichen einerseits die Zuordnung einer Unterbrechungsanforderung zu dem entsprechenden Satz von Warteschlangen und andererseits die direkte Überprüfung dieses Satzes anhand der Maske der jeweils laufenden virtuellen Maschine möglich ist. Dabei festgestellte Unterbrechungsanforderungen können daher unmittelbar ohne Zwischenschaltung des Hypervisors durch die laufende virtuelle Maschine behandelt werden, während Unterbrechungsanforderungen für andere virtuelle Maschinen bestehen bleiben, bis diese zum Ablauf kommen.

Im Gegensatz zur ersten Lösung, bei der die einzelnen Unterbrechungsklassen nicht individuell für jede virtuelle Maschine vorgegeben sind und daher der Hypervisor alle Anforderungen selbst bearbeiten und den betroffenen virtuellen Maschinen durch Simulation zuleiten muß, ist bei der zuletzt genannten Lösung für jede virtuelle Maschine jede Unterbrechungsklasse individuell vorgesehen.

Ausgehend von den üblichen acht Unterbrechungsklassen je virtueller Maschine benötigt man bei mehreren im System vorgesehenen virtuellen Maschinen in jedem Verarbeitungsprozessor ein entsprechendes Vielfaches von Unterbrechungssignalen und ein entsprechend breites Anforderungsregister, will man eine maschinenindividuelle Signalisierung an alle Verarbeitungsprozessoren sicherstellen, damit diese erkennen können, ob eine sie betreffende Anforderung vorliegt.

Bei den üblichen 32-Bit-breiten Registern führt das zwangsläufig zu einer Beschränkung der Anzahl der virtuellen Maschinen im System. Will man darüber hinaus die Anzahl der virtuellen Maschinen eines Systems vergrößern, bleibt lediglich eine Zusammenfassung von Unterbrechungsklassen der virtuellen Maschinen und deren Abbildung auf die Hardwareunterbrechungsklassen der Verarbeitungsprozessoren, wenn die Anzahl der Unterbrechungsklassen je virtueller Maschine nicht beschränkt werden soll. Diese Abbildung ist aber nicht umkehrbar, so daß es zur Annahme einer Unterbrechungsanforderung kommen kann, obwohl diese Anforderung durch die laufende virtuelle Maschine maskiert ist. In diesem Fall muß dann ebenfalls der Hypervisor eingreifen.

Entsprechend unterschiedlich gestalten sich auch die Möglichkeiten der Maskenbildung für die Verarbeitungsprozessoren. Erfolgt wie bei der zuerst beschriebenen Lösung das Bilden der Maske allein durch den Hypervisor, dem alle Änderungen mitzuteilen sind, dann führt das zu Leistungsverlusten. Verwendet man individuelle Masken für jede virtuelle Maschine mit Auswahl durch das Identitätskennzeichen der auf dem jeweiligen Verarbeitungsprozessor laufenden virtuellen Maschine, dann werden, wie bereits mit Bezug auf die Lösung der EP-A2-0213952 erläutert, nur Unterbrechungsanforderungen für die einem Verarbeitungsprozessor zugeteilten virtuellen Maschinen angenommen.

Zur Ereignissteuerung ist es oft zweckmäßig, Unterbrechungsanforderungen für nicht laufende virtuelle Maschinen einstellbar dem Hypervisor zuleiten zu können. Eine weitere Möglichkeit der Maskenbildung besteht daher in der Einstellung eines spezifischen Maskenteils durch die jeweilige virtuelle Maschine, während die restliche Maske für andere virtuelle Maschinen jeweils beim Ablaufstart der virtuellen Maschine auf einem Prozessor vom Hypervisor zur Verfügung gestellt wird. Sind dabei anderen virtuellen Maschinen zugehörige Maskenteile nicht ausmaskiert, können diese entweder nicht auf einem anderen Verarbeitungsprozessor gestartet werden oder der Hypervisor muß Unterbrechungsanforderungen für eine laufende virtuelle Maschine annehmen und sie ihr auf dem anderen Verarbeitungsprozessor durch komplexe Simulation zustellen.

Ein entsprechendes Lösungsbeispiel ist in der EP-A2-0301275 beschrieben. Hierbei ist jeder virtuellen Maschine eine Hardwareunterbrechungsklasse zugeordnet, die durch ein Bit in einem 32-Bit-Register im jeweiligen Verarbeitungsprozessor gekennzeichnet ist, was in den der virtuellen Maschine zugeteilten Gerätekontrollblöcken vermerkt ist. Die Unterbrechungsmaskierung erfolgt in jedem Verarbeitungsprozessor durch die effektive Maske, die aus der vom Hypervisor eingestellten globalen Unterbrechungsmaske für die Behandlung von Unterbrechungsanforderungen für andere virtuellen Maschinen und dem Bündelungsbit der eigenen Maske der virtuellen Maschine gebildet wird. Eine von der effektiven Maske nicht maskierte Unterbrechungsanforderung wird daher in der üblichen Weise vom Bearbeitungsprozessor angenommen. Ist sie für die laufende virtuelle Maschine bestimmt, wird geprüft, ob die im Gerätekontrollblock zusätzlich vermerkte und auf eine vorgegebene virtuelle Maschine bezogene Unterbrechungsklasse durch die zugehörige Maske im Verarbeitungsprozessor maskiert ist. Ist dies nicht der Fall, wird sie der auf dem Verarbeitungsprozessor laufenden virtuellen Maschine direkt zur Behandlung zugeleitet. Andernfalls wird wie bei globalen, d.h. für wartende virtuelle Maschinen bestimmten, Unterbrechungsanforderungen der Hypervisor aufgerufen.

Bei Teilmaskierung hat diese Lösung den Nachteil, daß auch für laufende virtuelle Maschinen bestimmte Unterbrechungsanforderungen mit hoher Wahrscheinlichkeit dem Hypervisor zugeleitet werden müssen. Das gilt auch, wenn eine virtuelle Maschine auf einem Verarbeitungsprozessor zum Ablauf kommen soll, da der Hypervisor die globale Maske in einem anderen Prozessor nicht ändern kann.

Aufgabe der Erfindung ist es daher, die Behandlung von Unterbrechungsanforderungen des Ein-/Ausgabesystems in einem virtuellen Maschinensystem so zu gestalten, daß
- die Anzahl der zwischen dem Ein-/Ausgabesystem und den Verarbeitungsprozessoren auszutauschenden Signale möglichst gering ist,
- jeder virtuellen Maschine alle architekturbedingten Unterbrechungsklassen ohne Einschränkung zur Verfügung stehen und
- die Anzahl der im System möglichen virtuellen Maschinen nicht beschränkt ist und
- der Hypervisor steuernd eingreifen kann, ohne daß die virtuellen Maschinen an die Verarbeitungsprozessoren permanent gebunden sind oder durch zu häufige Inanspruchnahme des Hypervisors unnötige Verluste entstehen.

Diese Aufgabe wird bezüglich des der Erfindung zugrundeliegenden Verfahrens durch die Merkmale des Patentanspruches 1 gelöst. Danach wird im Gegensatz zu den bekannten Lösungen die Überprüfung auf das Vorliegen von, von den einzelnen Verarbeitungsprozessoren entgegennehmbaren Unterbrechungsanforderungen des Ein-/Ausgabesystems einer zentralen Unterbrechungssteuerung übertragen, der alle notwendigen Masken in Zuordnung zu den einzelnen virtuellen Maschinen und den zugeteilten Verarbeitungsprozessoren mitgeteilt werden und die die Belegung der einzelnen Warteschlangen als Anforderungen speichert. Damit entfällt die parallele Signalisierung an alle Verarbeitungsprozessoren. Außerdem besteht unabhängig von den einzelnen Verarbeitungsprozessoren und ohne diese zu belasten die Möglichkeit zu prüfen, ob Unterbrechungsanforderungen für die auf den Verarbeitungsprozessoren laufenden virtuellen Maschinen vorliegen und angenommen werden können, so daß eine vorliegende Unterbrechungsanforderung an den zuständigen Verarbeitungsprozessor weitergeleitet und bei Annahme behandelt werden kann.

Um dabei zu vermeiden, daß eine Unterbrechungsanforderung an einen Verarbeitungsprozessor weitergeleitet wird, wenn dieser gerade nicht unterbrechbar ist, teilt jeder Verarbeitungsprozessor der Unterbrechungssteuerung seine jeweilige Unterbrechungsbereitschaft gesondert mit.

Bei Annahme einer Unterbrechungsanforderung muß der zugehörige Gerätekontrollblock vom Prozessor aus seiner Warteschlange ausgegliedert werden. Weitere Unterbrechungsanforderungen in dieser Warteschlange müssen daher in der Unterbrechungssteuerung erneut gekennzeichnet werden. Dazu ist es zweckmäßig, daß gemäß der Weiterbildung entsprechend Patentanspruch 3 dieses erneute Setzen der Anforderung in der Unterbrechungssteuerung durch den ausgliedernden Verarbeitungsprozessor erfolgt. Je Warteschlange wird daher nur ein Anforderungsbit in der Unterbrechungssteuerung benötigt, und diese wird auch nicht mit einer zusätzlichen Überprüfung der einzelnen Warteschlangen auf Belegungen belastet.

Anforderungen an nicht laufende virtuelle Maschinen bleiben dagegen solange gespeichert und unberücksichtigt, bis diese auf einem der Verarbeitungsprozessoren zum Ablauf kommen und die zugehörige Unterbrechungsmaske die Zustellung zuläßt. Daher muß der Hypervisor von Zeit zu Zeit alle virtuellen Maschinen zum Ablauf bringen, was gegebenenfalls zu unnötigen Aufrufen führen kann.

Weiterbildungen der Erfindung gemäß Patentanspruch 4 und 5 ermöglichen daher auch die Weiterleitung von Unterbrechungsanforderungen für wartende virtuelle Maschinen an unterbrechungsbereite Verarbeitungsprozessoren, die einer anderen virtuellen Maschine zugeordnet sind. Jedoch wird in diesem Falle vom Verarbeitungsprozessor unmittelbar der Hypervisor aufgerufen und die Unterbrechungsanforderung an diesen zur weiteren Entscheidung weitergeleitet.

Wartende virtuelle Maschinen, für die Unterbrechungsanforderungen auch von für andere virtuelle Maschinen arbeitenden Verarbeitungsprozessoren entgegengenommen werden können, werden daher durch den Hypervisor in der Unterbrechungssteuerung markiert. Dafür reicht ein Steuerbit. Jedoch werden in diesem Falle Unterbrechungsanforderungen aller Unterbrechungsklassen für eine wartende virtuelle Maschine über einen der unterbrechungsbereiten Verarbeitungsprozessoren an den Hypervisor weitergeleitet, auch wenn diese wegen entsprechender Maskierung dann nicht behandelt werden können, so daß der Hypervisor vielfach unnötig aufgerufen wird und die Anforderung speichern muß, was zu Verlusten führt. Zweckmäßiger ist daher eine nach Unterbrechungsklassen unterteilte Maskierung in der Unterbrechungssteuerung, so daß der Hypervisor nur aufgerufen wird, wenn die Unterbrechungsanforderung durch die klassenbezogene globale Maskierung der virtuellen Maschine zulässig ist.

Zusätzlich besteht gemäß Patentanspruch 6 die Möglichkeit, die Weiterleitung solcher globaler Unterbrechungsanforderungen auf vorgegebene virtuelle Maschinen zu beschränken, indem diese durch den Hypervisor in der Unterbrechungssteuerung für jeden Verarbeitungsprozessor gesondert markiert werden. Auf diese Weise wird verhindert, daß mit höherer Priorität laufende virtuelle Maschinen in ihrem Ablauf gegebenenfalls unterbrochen werden, was wiederum zu Verlusten führen kann.

Unterbrechungsanforderungen können einer virtuellen Maschine durch den Hypervisor normalerweise dadurch zugestellt werden, daß ein entsprechender Statuswechsel vorgenommen wird. Dies ist aber nur möglich, wenn die Unterbrechungsanforderung nicht maskiert ist. Andernfalls müssen alle Maskenänderungen einer virtuellen Maschine dem Hypervisor mitgeteilt werden, damit dieser die Zustellbarkeit prüfen kann. Gemäß den Weiterbildungen der Erfindung entsprechend den Patentansprüchen 7 oder 8 hat dagegen der Hypervisor die Möglichkeit in den einzelnen Verarbeitungsprozessoren oder aber vorteilhafter in der Unterbrechungssteuerung eine nach Unterbrechungsklassen unterteilte Markierung vorzunehmen, die anzeigt, daß der Hypervisor von einer laufenden virtuellen Maschine aufgerufen werden will. Diese Markierung wird dann anhand der jeweils gültigen Unterbrechungsmaske überprüft und, sobald die markierte Anforderung nicht mehr maskiert ist, der Hypervisor aufgerufen. Die Markierung in der Unterbrechungssteuerung hat dabei den Vorteil, daß sie nicht allen Verarbeitungsprozessoren einer virtuellen Maschine mitgeteilt werden muß, da die Befähigung zur Annahme von Unterbrechungsanforderungen für die virtuelle Maschine auf die Verarbeitungsprozessoren unterschiedlich verteilt sein kann. Außerdem werden auch in diesem Falle die Verarbeitungsprozessoren von der Überprüfung entlastet.

Die Realisierung des der Erfindung zugrundeliegenden Verfahrens und seiner Weiterbildungen erfordern nur einen verhältnismäßig geringen Aufwand für die zentrale Unterbrechungssteuerung gemäß den Patentansprüchen 9 bis 16. Er besteht in erster Linie aus Speichermitteln für die Speicherung der Unterbrechungsanforderung, der Masken und der Markierungen, sowie aus Mitteln zur Entgegennahme der Unterbrechungsanforderungen vom Ein-/Ausgabesystem und der Mitteilungen über die Masken und Markierungen von den einzelnen Verarbeitungsprozessoren und aus weiteren Mitteln zur Überprüfung der Unterbrechungsanforderungen anhand der jeweils vorliegenden Masken und Markierungen und zur Weiterleitung zustellbarer Unterbrechungsanforderungen an den jeweiligen Verarbeitungsprozessor.

Einzelheiten der Erfindung seien nachfolgend anhand des in der Zeichnung dargestellten Ausführungsbeispieles näher erläutert. Im einzelnen zeigen
- FIG 1: ein Übersichtsschaltbild eines virtuellen Maschinensystems,
- FIG 2: die Struktur der Unterbrechungswarteschlangen des Ein-/Ausgabesystems mit den Anforderungsregistern für jede virtuelle Maschine in der Unterbrechungssteuerung,
- FIG 3: die Speichermittel der Unterbrechungssteuerung,
- FIG 4: ein Flußdiagramm für den Steuerungsablauf in der Unterbrechungssteuerung und
- FIG 5: ein Flußdiagramm für den Unterbrechungsablauf in den einzelnen Verarbeitungsprozessoren.

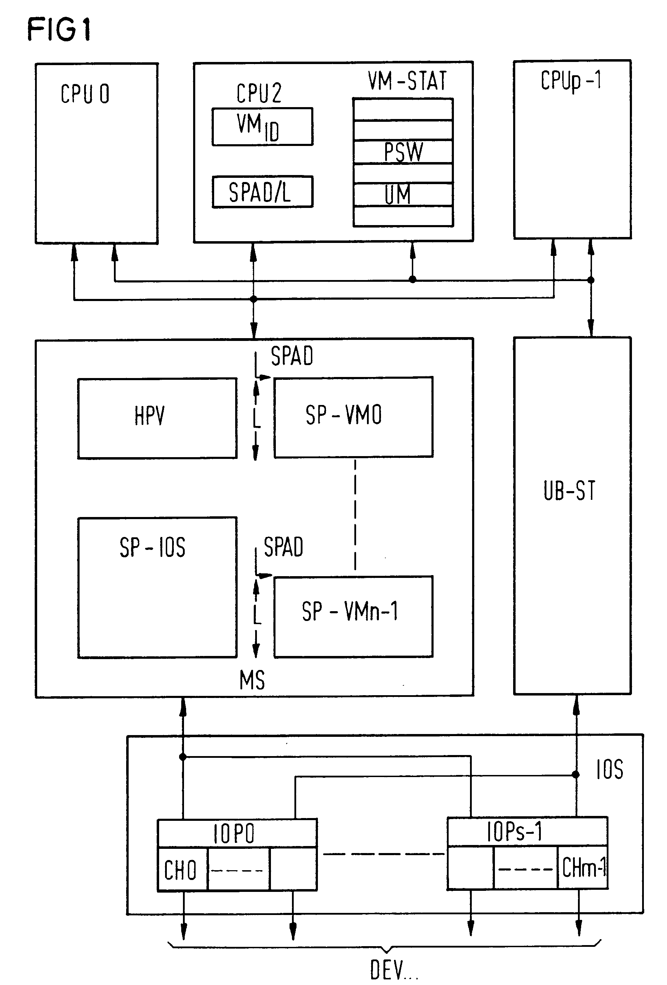

Das Übersichtsschaltbild von FIG 1 zeigt eine Reihe von Verarbeitungsprozessoren CPU0 bis CPUp-1, auf denen die einzelnen virtuellen Maschinen VM1 bis VMn des virtuellen Systems zum Ablauf kommen, das Ein-/Ausgabesystem IOS mit mehreren Ein-/Ausgabeprozessoren IOP0 bis IOPs-1, Kanälen CHl bis CHm und an diesen angeschlossenen Geräten DEV, das Speicherwerk MS mit verschiedenen Bereichen, von denen der Bereich HPV dem übergeordneten Steuerprogramm oder dem Hypervisor, die Bereiche SP-VM0 bis SP-YMn-1 den einzelnen virtuellen Maschinen VM0 bis VMn-1 und der Bereich SP-IOS dem Ein-/Ausgabesystem IOS zugeordnet ist. Zusätzlich gezeigt ist die gemäß der Erfindung arbeitende zentrale Unterbrechungssteuerung UB-ST, die Unterbrechungsanforderungen des Ein-/Ausgabesystems IOS entgegennimmt und diese auf Grund der von den einzelnen Verarbeitungsprozessoren CPU0 bis CPUp-1 erhaltenen Mitteilungen überprüft und wenn möglich an einen der Verarbeitungsprozessoren weiterleitet.

Der Hypervisor HPV steuert in an sich bekannter Weise das gesamte virtuelle Maschinensystem. Er verwaltet die einzelnen Betriebsmittel des Systems und teilt diese den virtuellen Maschinen VM0 bis VMn-1 zu. Eine virtuelle Maschine kann dabei auf mehreren Verarbeitungsprozessoren zum Ablauf kommen, indem der jeweils zugehörige Status VM-STAT, der u.a. das Programmstatuswort PSW und die Unterbrechungsmaske UM umfaßt, in die Register eines der Verarbeitungsprozessoren CPU... geladen wird. Jeder virtuellen Maschine sind außerdem ein Identitätskennzeichen VM_{ID}, das die Beziehung zu den zugeordneten Betriebsmitteln sichert, und Angaben, z.B. Anfangsadresse SPAD mit Länge L des Bereichs, zur Kennzeichnung des jeweils zugehörigen Bereichs im Speicher MS zugeordnet.

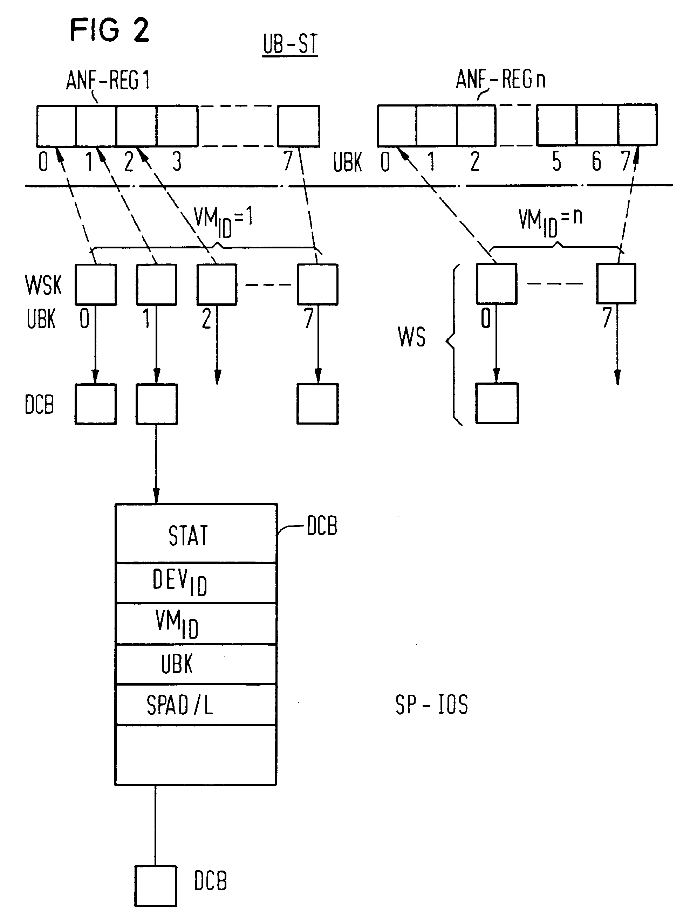

FIG 2 zeigt die Warteschlangenköpfe WSK für die nach Unterbrechungsklassen UBK0 bis UBK7 geordneten und aus den den einzelnen Geräten zugeordneten Gerätekontrollblöcken DCB durch entsprechende Adressenverknüpfungen in an sich bekannter Weise gebildeten Warteschlangen WS je virtueller Maschine VM.... Die einzelnen Gerätekontrollblöcke DCB enthalten in bekannter Weise die üblichen Status- und Steuerinformationen. Für den von Verarbeitungsprozessoren CPU... unabhängigen Betrieb der Geräte DEV... durch das Ein-/Ausgabesystem IOS sind in jedem Gerätekontrollblock DCB die Speicherangaben SPAD/L der zugehörigen virtuellen Maschine VM... vermerkt. Außerdem sind in den Gerätekontrollblöcken DCB das Identitätskennzeichen VM_{ID} der zugehörigen virtuellen Maschine VM... und die Unterbrechungsklasse UBK... für Unterbrechungsanforderungen gespeichert. Auf Grund der beiden letzten Angaben VM_{ID} und UBK... kann daher jeder Gerätekontrollblock DCB im Falle einer Unterbrechungsanforderung des zugehörigen Gerätes DEV... einer der Warteschlangen WS... eindeutig zugeordnet werden.

Sobald einer der Gerätekontrollblöcke DCB an einen der Warteschlangenköpfe WSK angegliedert wird, erfolgt eine Meldung an die Unterbrechungssteuerung VB-ST, und im dortigen Anforderungsregister, z.B. ANF-REGn, für die betroffene virtuelle Maschine, z.B. VMn, wird dann das der zugehörigen Unterbrechungsklasse UBK... entsprechende Bit gesetzt.

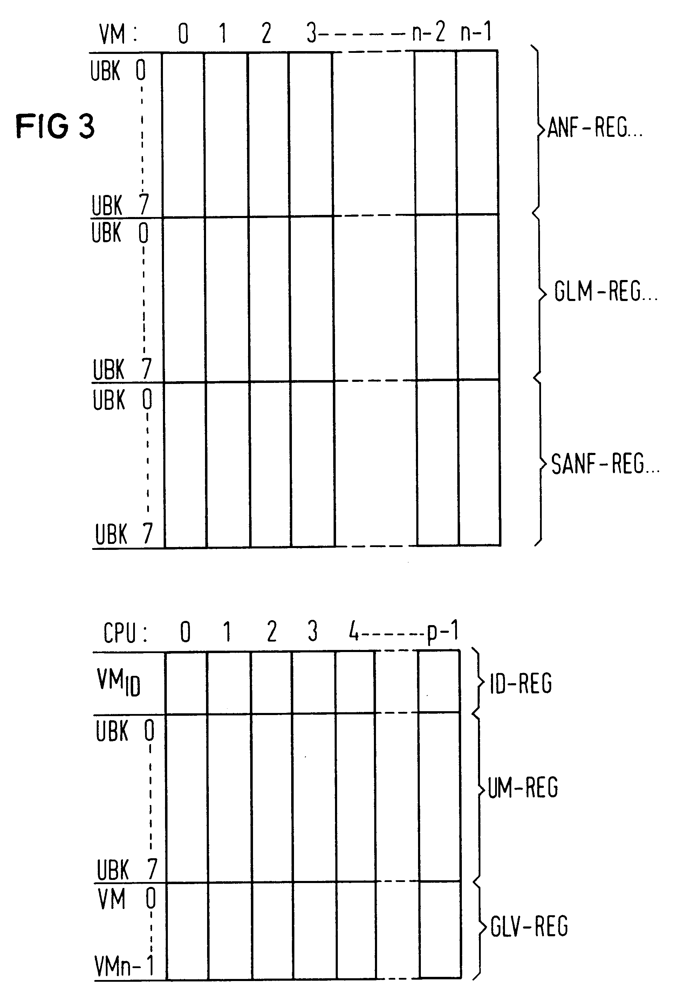

FIG 3 zeigt die in der Unterbrechungssteuerung UB-ST benötigten Speichermittel, die zumindestens aus den Anforderungsregistern ANF-REG... je virtueller Maschine VM0 bis VMn-1 mit je einem Bit je Unterbrechungsklasse UBK0 bis UBK7 und einem kombinierten Register ID/UM-REG... je Verarbeitungsprozessor CPU0 bis CPUp-1 zur Speicherung der prozessorbezogenen Unterbrechungsmasken UM der auf den Verarbeitungsprozessoren jeweils laufenden virtuellen Maschinen und des zugehörigen Identitätskennzeichens VM_{ID} bestehen. Die prozessorbezogenen Angaben ID/UM erhält die Unterbrechungssteuerung VB-ST jeweils vom zugehörigen Verarbeitungsprozessor CPU... mitgeteilt, wenn dieser einer virtuellen Maschine VM... zugeordnet wird oder die Maske UM durch die virtuelle Maschine VM... geändert wird.

Im vorliegenden Fall ist unterstellt, daß jeder Verarbeitungsprozessor CPU... seine Unterbrechungsbereitschaft zusätzlich signalisiert, so daß prozessorbezogen anhand des gespeicherten Identitätskennzeichens VM_{ID} unmittelbar das zugehörige Anforderungsregister ANF-REG... festliegt, das dann auf Vorliegen einer Unterbrechungsanforderung überprüft wird. Auf diese Weise wird jeweils nur das Anforderungsregister der virtuellen Maschine überprüft, die auf einem unterbrechungsbereiten Verarbeitungsprozessor läuft, so daß eine unmaskierte Unterbrechungsanforderung für diese virtuelle Maschine unmittelbar weiterleitbar ist.

Über diesen Grundbestand an Speichermitteln hinaus können für die Behandlung von globalen Unterbrechungsanforderungen, die für eine wartende virtuelle Maschine bestimmt sind, sowie für die Simulation von Unterbrechungsanforderungen durch den Hypervisor an eine laufende virtuelle Maschine zusätzliche Speichermittel vorgesehen sein. Es handelt sich hierbei um ein weiteres 1-Bit-Register bzw. - wie gezeigt - um ein ebenfalls nach Unterbrechungsklassen unterteiltes 8-Bit-Register GLM-REG... je virtueller Maschine VM... für die Kennzeichnung, ob eine Unterbrechungsanforderung für diese virtuelle Maschine auch einem unterbrechungsbereiten Verarbeitungsprozessor zugestellt werden darf, obwohl auf diesem eine andere virtuelle Maschine gerade abläuft. Die Register GLM-REG können für jede virtuelle Maschine VM... zu jeder Zeit vom Hypervisor über einen beliebigen Verarbeitungsprozessor CPU... verändert werden.

Außerdem können diese Register um ein Register GLV-REG je Verarbeitungsprozessor CPU... ergänzt sein, das bei Zuordnung einer virtuellen Maschine VM... zu einem Verarbeitungsprozessor CPU..., geladen wird. Es enthält je virtueller Maschine VM0 bis VMn-1 ein Bit, das anzeigt, welche anderen virtuellen Maschinen VM_{ID} die auf dem jeweiligen Verarbeitungsprozessor laufende virtuelle Maschine VM... global unterbrechen dürfen.

Schließlich kann je virtueller Maschine VM... ein weiteres, nach Unterbrechungsklassen UBK... unterteiltes Anforderungsregister SANF-REG... vorgesehen sein, mit dem Anforderungen des Hypervisors an eine laufende virtuelle Maschine simuliert werden, um dieser Unterbrechungsanforderungen zustellen zu können, wenn eine direkte Zustellung durch einfache Statusmanipulation nicht möglich ist. Neben Unterbrechungsanforderungen des Ein-/Ausgabesystems IOS können auch andere systembedingte Anforderungen für eine bestimmte virtuelle Maschine mit Hilfe dieser Register durch die Unterbrechungssteuerung UB-St bearbeitet werden, wenn der Umfang der Anforderungsklassen und der Masken UM entsprechend erweitert wird. Das Setzen der Anforderungen in diesen Registern SANF-REG... erfolgt daher nicht vom Ein-/Ausgabesystem aus, sondern von einem für den Hypervisor gerade arbeitenden Verarbeitungsprozessor CPU.... Diese Register werden in der gleichen Weise wie die Register ANF-REG..., jedoch nur auf lokale Unterbrechungsanforderungen, mittels der Unterbrechungsmaske UM überprüft.

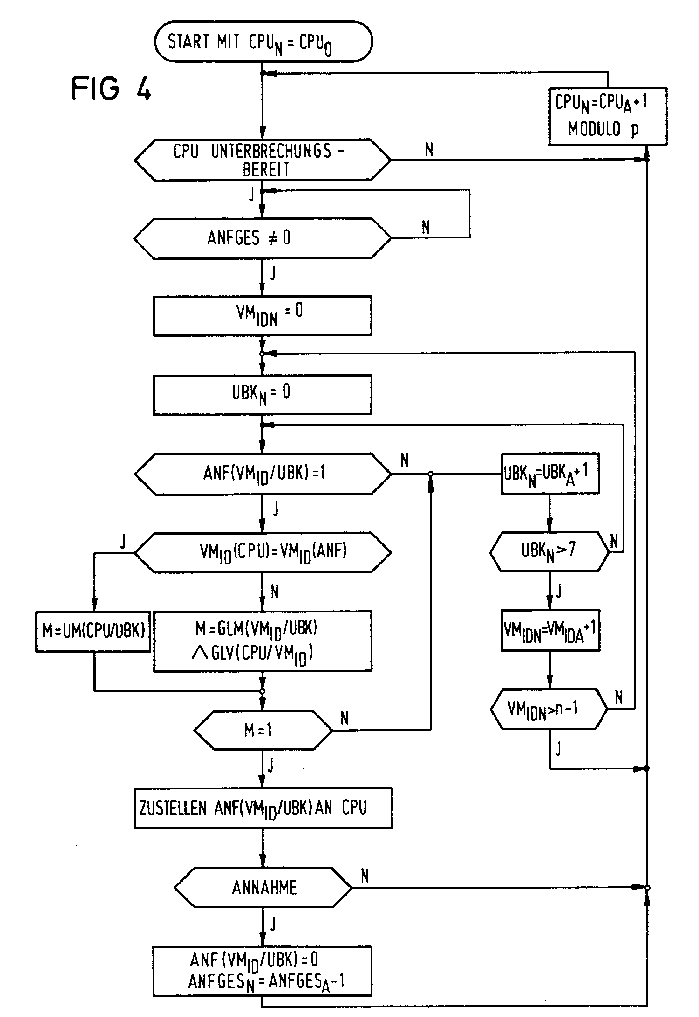

Die prinzipielle Arbeitsweise der Unterbrechungssteuerung UB-ST ergibt sich aus dem Flußlaufdiagramm von FIG 4. Die Steuerung sucht der Reihe nach einen seine Unterbrechungsbereitschaft signalisierenden Verarbeitungsprozessor CPU... auf. Ist ein solcher gefunden, wird geprüft, ob überhaupt eine Unterbrechungs anforderung vorliegt. Ist dies entsprechend ANFGES=0 nicht der Fall, wird gewartet, bis eine Unterbrechungsanforderung eintrifft. Im anderen Falle wird der Reihe nach eine der virtuellen Maschinen VM... und für jede dieser virtuellen Maschinen der Reihe nach eine der Unterbrechungsklassen UBK0 bis UBK7 überprüft. Liegt mit ANF(VM_{ID}, UBK)=0 keine Anforderung für die überprüfte Unterbrechungsklasse UBK... und die durch VM_{ID} gekennzeichnete virtuelle Maschine vor, wird die nächste Unterbrechungsklasse UBK... geprüft usw., bis eine Anforderung mit ANF(VM_{ID},UBK)=1 gefunden ist. Wenn die auf dem unterbrechungsbereiten Verarbeitungsprozessor CPU... laufende virtuelle Maschine mit der virtuellen Maschine, für die die Unterbrechungsanforderung bestimmt ist, identisch ist, wird anhand der prozessorbezogenen Unterbrechungsmaske entsprechend M=UM(CPU/UBK) überprüft, ob die zugehörige Unterbrechungsklasse maskiert ist oder nicht. Ist M=1 nicht erfüllt, wird die Überprüfung für die nächste Unterbrechungsklasse UBK. .., oder falls alle Unterbrechungsklassen UBK0 bis UBK7 überprüft sind, die Überprüfung für die nächste virtuelle Maschine VM... fortgesetzt.

Ist dagegen M=1 gegeben, wird die Unterbrechungsanforderung dem jeweiligen Prozessor CPU unter Angabe der Identität VM_{ID} und der Unterbrechungsklasse UBK... zugestellt und abgewartet, ob die Zustellung Erfolg hat, da der Verarbeitungsprozessor die ursprünglich signalisierte Unterbrechungsbereitschaft zwischenzeitlich aufgehoben haben kann, so daß die Prüfung bezogen auf den nächsten unterbrechungsbereiten Verarbeitungsprozessor CPU... fortgesetzt werden muß.

Erfolgt dagegen eine Annahme der zugestellten Unterbrechungsanforderungen, dann wird im betroffenen Anforderungsregister ANF-REG... die Anforderung entsprechend ANF(VM_{ID},UBK)=0 gelöscht und die Gesamtzahl der vorliegenden Anforderungen entsprechend ANFGES_{N}=ANFGES_{A}-1 um 1 vermindert und die Prüfung mit dem nächsten unterbrechungsbereiten Verarbeitungsprozessor CPU... fortgesetzt.

Stimmt die auf dem unterbrechungsbereiten Verarbeitungsprozessor laufende virtuelle Maschine nicht mit der überein, für die die festgestellte Anforderung bestimmt ist, also gilt VM_{ID}(CPU) ≠ VM_{ID} (ANF), dann wird geprüft, ob eine globale Unterbrechungsanforderung vorliegt, die dem Verarbeitungsprozessor zur Weiterleitung an den Hypervisor zugestellt werden kann. Diese Überprüfung erfolgt anhand der globalen Unterbrechungsmaske GLM(VM_{ID},UBK) und anhand der Markierungsmaske GLV (CPU, VM_{ID}). Sind beide Bedingungen erfüllt, kann die festgestellte Unterbrechungsanforderung ebenfalls zugestellt werden usw..

Der dem Flußlaufdiagramm von FIG 4 zugrundegelegte Steuerungsablauf ist rein seriell. Grundsätzlich können jedoch viele Prüfvorgänge parallel ausgeführt werden. So können z.B. die gespeicherten Anforderungen in den Registern ANF-REG... und SANF-REG... für alle Unterbrechungsklassen UBK... anhand der Unterbrechungsmaske UM parallel überprüft werden, wobei bei mehreren gleichzeitig vorliegenden unmaskierten Anforderungen jeweils die Unterbrechungsklasse mit der höchsten Priorität ausgewählt wird. Auch die Überprüfung auf das Vorliegen von globalen Anforderungen anhand der globalen Unterbrechungsmaske GLM einer virtuelle Maschine VM... kann für alle Unterbrechungsklassen gleichzeitig erfolgen, wobei anhand des jeweils zugehörigen Registers GLV-REG... gleichzeitig überprüft werden kann, ob der unterbrechungsbereite Verarbeitungsprozessor CPU... für eine globale Unterbrechung durch diese virtuelle Maschine zugelassen ist, usw..

Schließlich braucht im Flußdiagramm von FIG 4 nach Feststellung eines unterbrechungsbereiten Verarbeitungsprozessors GPU... bei Vorliegen einer Unterbrechungsanforderung die Überprüfung nicht mit einer vorgegebenen virtuellen Maschine entsprechend VM_{ID}=0 zu beginnen, sondern als Startpunkt für die Prüfung kann zweckmässig jeweils die auf dem unterbrechungsbereiten Verarbeitungsprozessor ablaufende und im kombinierten prozessorbezogenen Register ID/UM-REG... mit VM_{ID} gekennzeichnete virtuelle Maschine gewählt werden, so daß für diese virtuelle Maschine bestimmte, lokale Unterbrechungsanforderungen bevorzugt behandelt werden.

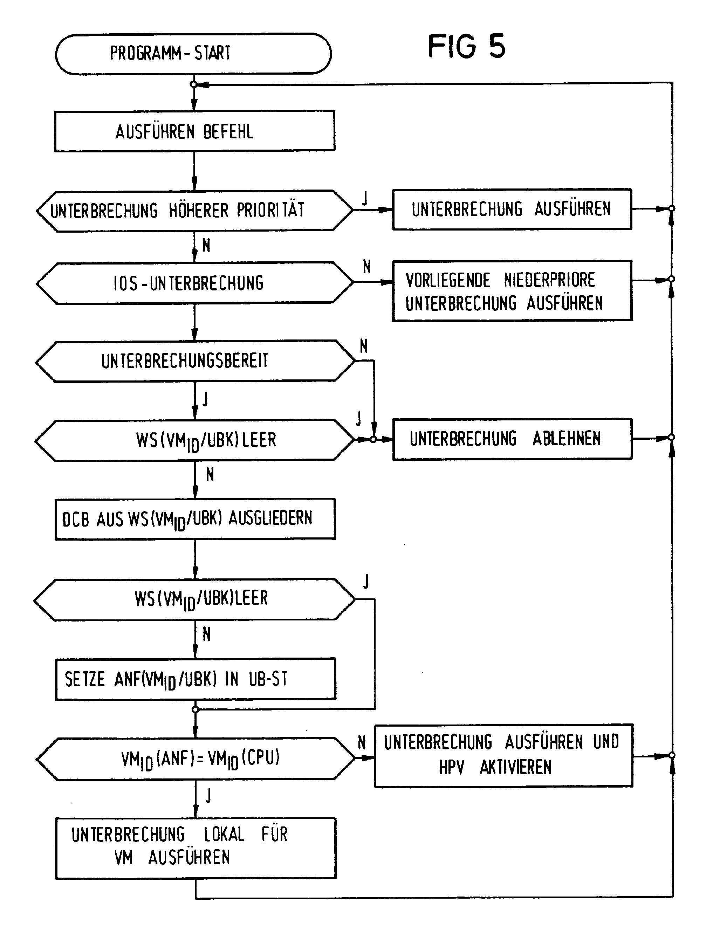

FIG 5 zeigt schließlich das Flußlaufdiagramm für den Unterbrechungsablauf innerhalb der einzelnen Verarbeitungsprozessoren CPU0 bis CPU_{P}-1. Nach Ausführung eines jeden Makrobefehls des laufenden Programms wird in an sich bekannter Weise geprüft, ob eine höher priorisierte Unterbrechung angefordert ist, und gegebenenfalls diese ausgeführt. Ist dies nicht der Fall, wird geprüft, ob eine Unterbrechungsanforderung des Ein-/Ausgabesystems vorliegt und gegebenenfalls auf das Vorliegen von Unterbrechungsanforderungen niedrigerer Priorität geprüft, bevor gegebenenfalls das laufende Programm fortgesetzt wird.

Liegt dagegen eine Mitteilung über eine Unterbrechungsanforderung des Ein-/Ausgabesystems IOS vor, dann wird anhand des mitgeteilten Identitätskennzeichens VM_{ID} und der Unerbrechungsklasse UBK... die zugehörige Warteschlange WS im Speicherbereich SP-IOS auf Belegung überprüft. Ist die überprüfte Warteschlange WS... leer, wird die Annahme der Unterbrechungsanforderung abgelehnt und das laufende Programm fortgesetzt. Im anderen Falle wird der erste Gerätekontrollblock DCB der Warteschlange WS aufgesucht und aus dieser für die weitere Bearbeitung ausgegliedert. Anschließend prüft der Verarbeitungsprozessor CPU..., ob die Warteschlange nach der Ausgliederung noch belegt ist. Ist dies der Fall, wird die Unterbrechungssteuerung UB-ST angesteuert und die gelöschte Unterbrechungsanforderung im zugehörigen Anforderungsregister ANF-REG... erneut gesetzt. Weiterhin wird durch den Verarbeitungsprozessor geprüft, ob die Unterbrechungsanforderung für die auf ihm laufende virtuelle Maschine VM... bestimmt ist und somit eine lokal zu behandelnde Unterbrechungsanforderung vorliegt oder ob die Unterbrechungsanforderung für eine andere virtuelle Maschine bestimmt und daher der Hypervisor zu aktivieren ist. In beiden Fällen kommt es zur Unterbrechung des laufenden Programms für die Behandlung der Unterbrechungsanforderung.

Unabhängig von der eigenständigen Überwachungstätigkeit der Unterbrechungssteuerung UB-ST zwecks Ermittlung von in den Anforderungsregistern ANF-REG...und SANF-REG... gespeicherten Unterbrechungsanforderungen besteht weiterhin die Möglichkeit, auch eine von einem der Verarbeitungsprozessoren ausgelöste Abfrage auf Vorliegen von Anforderungen für eine vorgegebene virtuelle Maschine auszuführen. Ebenso können in der Unterbrechungssteuerung gespeicherte Anforderungen auf Veranlassung eines Verarbeitungsprozessors gelöscht werden.

Die Erfindung ist schließlich nicht auf eine im Übersichtsschaltbild von FIG 1 wiedergegebene Systemstruktur beschränkt, sondern auch in virtuellen Systemen anwendbar, bei denen entsprechend FIG 13 der EP-A3-0067344 die Verarbeitungsprozessoren in Gruppen mit je einem Ein-/Ausgabesystem gebündelt sind und bei denen jede Gruppe über eine individuelle Zugriffssteuerung zu einem gemeinsamen, modulartig aufgebauten Speicherwerk zugreifen kann. In diesem Falle ist jeder Gruppe eine Unterbrechungs steuerung gemäß der Erfindung zuzuordnen, die wie die Zugriffssteuerungen für das Speicherwerk jeweils über denselben Informationsstand verfügen und Änderungen ihres Informationsstandes jeweils der anderen mitteilen.

## Patentansprüche

1. Verfahren zur Behandlung von Unterbrechungsanforderungen bei Ein-/Ausgabeoperationen in einem virtuellen Maschinensystem mit mehreren virtuellen Maschinen (VM0 bis VMn-1), denen jeweils ein eigenständiges Identitätskennzeichen (VM_{ID}) zugeordnet ist, und bestehend aus
- einem oder mehreren Verarbeitsprozessoren (CPU0 bis CPUP-1),
- einem Ein-/Ausgabesystem (IOS) mit Ein-/Ausgabeprozessoren (IOP...), Kanälen (CH...) und angeschlossenen Ein-/Ausgabegeräten (DEV...) und
- einem Speicherwerk (MS) mit einem Bereich (HPV) für den Hypervisor zur Steuerung des virtuellen Maschinensystems, mit den einzelnen virtuellen Maschinen (VM...) zugeordneten Bereichen (SP-VM0 bis SP-VMn-1) und mit einem dem Ein-/Ausgabesystem zugeordneten Bereich (SP-IOS),
wobei im Speicherbereich (SP-IOS) des Ein-/Ausgabesystems (IOS) für jede virtuelle Maschine (VM...) ein maschinenindividueller Satz von den einzelnen Unterbrechungsklassen (UBK0 bis UBK7) zugeordneten Warteschlangen (WS...) zur Abspeicherung von Unterbrechungsanforderungen des Ein-/Ausgabesystems (IOS) vorgesehen ist und die Weiterleitung von Unterbrechungsanforderungen an die jeweilige virtuelle Maschine (VM...) maskengesteuert erfolgt,
**dadurch gekennzeichnet**, daß jeder der Verarbeitungsprozessoren (CPU0 bis CPUp-1) bei Zuordnung zu einer virtuellen Maschine (VM0 bis VMn-1) jeweils das zugehörige Identitätskennzeichen (VM_{ID}) und bei deren Änderung die Maske (UM) für die Unterbrechungsbehandlung einer zentralen Unterbrechungssteuerung (UB-ST) mitteilt, daß das Ein-/Ausgabesystem (IOS) bei der erstmaligen Belegung einer Warteschlange (WS...) jeweils das die betroffene virtuelle Maschine (VM) kennzeichnende Identitätskennzeichen (VM_{ID}) und die zugehörige Unterbrechungsklasse (z.B. UBK7) zur Kennzeichnung einer Unterbrechungsanforderung der zentralen Unterbrechungssteuerung ebenfalls mitteilt und daß die Unterbrechungssteuerung (UB-ST) mitgeteilte Unterbrechungsanforderungen anhand des Identitätskennzeichens (VM_{ID}) der Anforderung und anhand der zugehörigen Unterbrechungsmaske (UM) überprüft, ob die Anforderung an einen der Verarbeitungsprozessoren (CPU) direkt weitergeleitet werden kann oder wegen nicht möglicher Weiterleitung zunächst unbearbeitet und daher gespeichert bleiben muß.

2. Verfahren nach Anspruch 1,
**dadurch gekennzeichnet**, 7 daß jeder der Verarbeitungsprozessoren (CPU0 bis CPUp-1) der Unterbrechungssteuerung (UB-ST) zusätzlich die Bereitschaft zur Annahme von Unterbrechungsanforderungen signalisiert.

3. Verfahren nach Anspruch 1 oder 2,
**dadurch gekennzeichnet**, daß jeder der Verarbeitungsprozessoren (CPU0 bis CPUp-1) bei Annahme einer von der Unterbrechungssteuerung (US-ST) zugestellten Unterbrechungsanforderung und deren Ausgliederung aus der zugehörigen Warteschlange (WS...) des Ein-/Ausgabesystems (IOS) überprüft, ob die betreffende Warteschlange (WS...) noch mit weiteren Anforderungen belegt ist, und daß bei Vorliegen weiterer Anforderungen der prüfende Verarbeitungsprozessor (CPU...) dies der Unterbrechungssteuerung (UB-ST) mitteilt und dadurch die gelöschte Anforderung wieder gesetzt wird.

4. Verfahren nach einem der Ansprüche 1 bis 3,
**dadurch gekennzeichnet**, daß über den jeweils dem Hypervisor (HPV) für das virtuelle Maschinensystem zugeordneten Verarbeitungsprozessor (CPU...) in der Unterbrechungssteuerung (UB-ST) jede einzelne virtuelle Maschine (VM0 bis VMn-1) gesondert markierbar (durch GLM) ist und daß für eine derartig markierte virtuelle Maschine vorliegende Unterbrechungsanforderungen als globale Unterbrechungsanforderungen von der Unterbrechungssteuerung (UB-ST) durch Übermittlung der Unterbrechungsklasse (UBK...) und des Identitätskennzeichens (VM_{ID}) der zugehörigen virtuellen Maschine einem auswählbaren, für eine andere virtuelle Maschine arbeitenden Verarbeitungsprozessor (CPU...) zugestellt wird, der dann die mitgeteilte Unterbrechungsanforderung an den Hypervisor (HPV) zur weiteren Entscheidung weiterleitet.

5. Verfahren nach Anspruch 4,
**dadurch gekennzeichnet**, daß die gesonderte Markierung (GLM) für die einzelnen virtuellen Maschinen (VM0 bis VMn-1) nach Unterbrechungsklassen (UBK0 bis UBK7) unterteilt erfolgt, so daß Unterbrechungsanforderungen einer nicht markierten Unterbrechungsklasse (UBK...) unberücksichtigt bleiben.

6. Verfahren nach Anspruch 4 oder 5,
**dadurch gekennzeichnet**, daß bei Zuordnung einer virtuellen Maschine (VMₓ) durch den Hypervisor (HPV) zu einem Verarbeitungsprozessor (CPUy) in der Unterbrechungssteuerung (UB-ST) jede einzelne virtuelle Maschine (VM0 bis VMn-1) gesondert markierbar (durch GLV) ist, und daß Unterbrechungsanforderungen für solche markierte virtuelle Maschinen zur Unterbrechung des mit einer solchen Markierung versehenen Verarbeitungsprozessors (CPU) und der auf ihnen laufenden virtuellen Maschine (VMₓ) zwecks Weiterleitung der Unterbrechungsanforderung an den Hypervisor (HPV) führen.

7. Verfahren nach einem der Ansprüche 1 bis 6,
**dadurch gekennzeichnet**, daß über den jeweils dem Hypervisor (HPV) für das virtuelle Maschinensystem zugeordneten Verarbeitungsprozessor (CPU...) bei Zuordnung einer der virtuellen Maschinen (VM...) zu einem oder mehreren der Verarbeitungsprozessoren in den zugeordneten Verarbeitungsprozessoren (CPU...) eine weitere, nach Unterbrechungsklassen (UBK0 bis UBK7) des Ein-/Ausgabesystems (IOS) und gegebenenfalls weiteren Anforderungsklassen für sonstige asynchrone Unterbrechungsanforderungen bei entsprechender Erweiterung der Unterbrechungsmaske unterteilte Markierung erfolgt, die eine Unterbrechungsanforderung durch den Hypervisor (HPV) anzeigt und die jeweils anhand der der virtuellen Maschine (VM...) zugeordneten und durch diese veränderbaren Unterbrechungsmaske (UM) überprüft wird, und daß der Verarbeitungsprozessor (CPU...) den Hypervisor (HPV) aufruft, wenn die gültige Unterbrechungsmaske (UM) die markierte Unterbrechungsanforderung freigibt.

8. Verfahren nach einem der Ansprüche 1 bis 6,
**dadurch gekennzeichnet**, daß über den jeweils dem Hypervisor (HPV) für das virtuelle Maschinensystem zugeordneten Verarbeitungsprozessor (CPU...) in der Unterbrechungssteuerung (UB-ST) für jede einzelne virtuelle Maschine (VM1 bis VMn) nach den Unterbrechungsklassen (UBK0 bis UBK7) des Ein-/Ausgabesystems (IOS) und gegebenenfalls weitere Anforderungsklassen für sonstige asynchrone Unterbrechungsanforderungen bei entsprechender Erweiterung der Unterbrechungsmaske unterteilte Unterbrechungsanforderungen (SANF) des Hypervisors (HVP) hinterlegbar sind und daß diese Unterbrechungsanforderungen wie Unterbrechungsanforderungen des Ein-/Ausgabesystems (IOS) von der Unterbrechungssteuerung (UB-ST) überprüft und bei Zustellbarkeit an den der zugehörigen virtuellen Maschine (VM...) zugeordneten Verarbeitungsprozessor (CPU...) weitergeleitet werden, der dann den Hypervisor (HPV) aufruft.

9. Unterbrechungssteuerung für ein virtuelles Maschinensystem mit mehreren virtuellen Maschinen (VM0 bis VMn-1), denen jeweils ein eigenständiges Identitätskennzeichen (VM_{ID}) zugeordnet ist, und bestehend aus
- einem oder mehreren Verarbeitsprozessoren (CPU0 bis CPUp-1),
- einem Ein-/Ausgabesystem (IOS) mit Ein-/Ausgabeprozessoren (IOP...), Kanälen (CH...) und angeschlossenen Ein-/Ausgabegeräten (DEV...) und
- einem Speicherwerk (MS) mit einem Bereich (HPV) für den Hypervisor zur Steuerung des virtuellen Maschinensystems, mit den einzelnen virtuellen Maschinen (VM...) zugeordneten Bereichen (SP-VM0 bis SP-VMn-1) und mit einem dem Ein-/Ausgabesystem zugeordneten Bereich (SP-IOS),
wobei im Speicherbereich (SP-IOS) des Ein-/Ausgabesystems (IOS) für jede virtuelle Maschine (VM...) ein maschinenindividueller Satz von den einzelnen Unterbrechungsklassen (UBK0 bis UBK7) zugeordneten Warteschlangen (WS...) zur Abspeicherung von Unterbrechungsanforderungen des Ein-/Ausgabesystems (IOS) vorgesehen ist und die Weiterleitung von Unterbrechungsanforderungen an die jeweilige virtuelle Maschine (VM...) maskengesteuert erfolgt,
**gekennzeichnet**,
- durch eine unabhängig arbeitende zentrale Unterbrechungssteuerung (UB-ST)
- mit je virtueller Maschine (VM0 bis VMn-1) vorgesehenen individuellen Speichermitteln (ANF-REG...) für die Speicherung der nach Unterbrechungsklassen (UBK0 bis UBK7) unterteilten Unterbrechungsanforderungen des Ein-/Ausgabesystems (IOS) und
- mit je Verarbeitungsprozessor (CPU0 bis CPUp-1) vorgesehenen individuellen Speichermitteln (ID/UM-REG...) zur Speicherung der zugehörigen Unterbrechungsmaske (UM) für die auf dem Verarbeitungsprozessor (CPU...) jeweils laufende virtuelle Maschine (VM ...) und deren Identitätskennzeichen (VM_{ID}),
- durch Mittel zur Entgegennahme und Abspeicherung der vom Ein-/Ausgabesystem (IOS) gemeldeten Unterbrechungsanforderungen in den entsprechenden individuellen Speichermitteln (ANF-REG...),
- durch Mittel zur Entgegennahme und Abspeicherung bzw. Löschung der von den einzelnen Verarbeitungsprozessoren (CPU0 bis CPUp-1) mitgeteilten Angaben (UM, VM_{ID}) über die jeweils zugeordnete virtuelle Maschine (VM...) und die zugehörige Unterbrechungsmaske (UM),
- durch Mittel zur Überprüfung der jeweils vorliegenden Unterbrechungsanforderungen anhand der Unterbrechungsmaske (UM) der jeweils zugehörigen virtuellen Maschine (VM...) auf ihre Zustellbarkeit und
- durch Mittel zur Weiterleitung zustellbarer Unterbrechungsanforderungen an den jeweiligen Verarbeitungsprozessor (CPU...).

10. Unterbrechungssteuerung nach Anspruch 9,
**gekennzeichnet**,
- durch Mittel zur Registrierung der von den einzelnen Verarbeitungsprozessoren (CPU0 bis CPUp-1) mitgeteilten Unterbrechungsbereitschaft und
- durch Mittel zur Überprüfung der Unterbrechungsanforderungen auf ihre Zustellbarkeit an einen unterbrechungsbereiten Verarbeitungsprozessor (CPU...).

11. Unterbrechungssteuerung nach Anspruch 9 oder 10,
**gekennzeichnet**,
- durch zusätzliche, je virtueller Maschine (VM0 bis VMn-1) vorgesehene individuelle Speichermittel (GLM-REG...) zur gesonderten Markierung der virtuellen Maschinen (VM...), für die vorliegende Unterbrechungsanforderungen an einen ausgewählten Verarbeitungsprozessor (CPU...) weiterzuleiten sind, auch wenn dieser nicht der markierten virtuellen Maschine (VM...) zugeordnet ist,
- durch Mittel zur Entgegennahme derartiger Markierungsmitteilungen von einem der Verarbeitungsprozessoren (CPU0 bis CPUp-1) und zu deren Registrierung und
- durch Mittel zur Ermittlung von Unterbrechungsanfoderungen für derartig markierte virtuelle Maschinen (VM...) und zur Weiterleitung dieser Anforderungen an einen der Verarbeitungsprozessoren (CPU...) unter Angabe des Identitätskennzeichens (VM_{ID}) der zugehörigen virtuellen Maschine (VM...).

12. Unterbrechungssteuerung nach Anspruch 11,
**gekennzeichnet durch** individuelle Speichermittel (GLM-REG...) je virtueller Maschine (VM0 bis VMn-1) für einen nach Unterbrechungsklassen (UBK0 bis UBK7) unterteilte gesonderte Markierung.

13. Unterbrechungssteuerung nach Anspruch 11 oder 12,
**gekennzeichnet durch** je Verarbeitungsprozessor (CPU...) vorgesehene Speichermittel (GLV-REG...) für die Kennzeichnung von virtuellen Maschinen (VM...), die den jeweiligen Prozessor global unterbrechen dürfen, durch Mittel zur Entgegennahme der in diesen individuellen Speichermitteln (GLV-REG) gespeicherten Information und durch Mittel zur Berücksichtigung dieser Information bei der Auswahl eines Verarbeitungsprozessors für die Zustellung einer globalen Unterbrechungsanforderung.

14. Unterbrechungssteuerung nach einem der Ansprüche 9 bis 13, **gekennzeichnet**,
- durch je virtueller Maschine (VM0 bis VMn-1) individuell vorgesehene Speichermittel (SANF-REG...) zur Speicherung von durch den Hypervisor (HVP) des virtuellen Maschinensystems simulierten und von einem der Verarbeitungsprozessoren (CPU0 bis CPUp-1) übermittelten, nach Unterbrechungsklassen (UBK0 bis UBK7) des Ein-/Ausgabesystems (IOS) und gegebenenfalls weiteren Anforderungsklassen für sonstige asynchrone Unterbrechungsanforderungen bei entsprechender Erweiterung der Unterbrechungsmaske unterteilten Unterbrechungsanforderungen (SANF) und
- durch Mittel zur Überprüfung dieser Speichermittel (SANF-REG ...) auf Vorliegen einer simulierten Unterbrechungsanforderung und auf deren Zustellbarkeit anhand der vorliegenden Unterbrechungsmaske (UM) an den der zugehörigen virtuellen Maschine (VM...) zugeordneten Verarbeitungsprozessor (CPU...).

15. Unterbrechungssteuerung nach einem der Ansprüche 9 bis 14, **dadurch gekennzeichnet**, daß die einzelnen Speichermittel aus Registern bestehen, in denen jeder Unterbrechungsklasse (UBK0 bis UBK7) und gegebenenfalls jeder weiteren Anforderungsklasse bzw. jeder virtuellen Maschine (VM₀ bis VMn-1) jeweils eine Bitstelle zugeordnet ist.

16. Unterbrechungssteuerung nach einem der Ansprüche 9 bis 15, **gekennzeichnet durch** Mittel zur Abfrage und/oder Löschung von Unterbrechungsanforderungen für eine vorgegebene virtuelle Maschine (VM...) durch einen Verarbeitungsprozessor (CPU... ) , auch wenn dieser nicht unterbrechungsbereit ist.

## Claims

1. Method for handling input/output operation interrupt requests in a virtual machine system having a plurality of virtual machines (VM0 to VMn-1), to which an independent identifier (VM_{ID}) is assigned in each case, and comprising
- one or more processing processors (CPU0 to CPUp-1),
- an input/output system (IOS) having input/output processors (IOP...), channels (CH...) and connected input/output devices (DEV...), and
- a memory system (MS) having an area (HPV) for the hypervisor for controlling the virtual machine system, having areas (SP-VM0 to SP-VMn-1) assigned to the individual virtual machines (VM...) and having an area (SP-IOS) assigned to the input/output system,
in which a machine-specific set of queues (WS...) assigned to the individual interrupt classes (UBK0 to UBK7) is provided in the memory area (SP-IOS) of the input/output system (IOS) for each virtual machine (VM...) for storing interrupt requests of the input/output system (IOS), and interrupt requests are forwarded under mask control to the respective virtual machine (VM...), characterized in that when assigned to a virtual machine (VM0 to VMn-1), each of the processing processors (CPU0 to CPUp-1) notifies a central interrupt controller (UB-ST) in each case of the respective identifier (VM_{ID}) and when the latter is changed it notifies it of the mask (UM) for the interrupt handling, in that when a queue (WS...) is occupied for the first time the input/output system (IOS) likewise notifies the central interrupt controller in each case of the identifier (VM_{ID}) identifying the respective virtual machine (VM) and of the associated interrupt class (e.g. UBK7) for identifying an interrupt request, and in that on the basis of the identifier (VM_{ID}) of the request and on the basis of the associated interrupt mask (UM) the interrupt controller (UB-ST) checks notified interrupt requests as to whether the request can be forwarded directly to one of the processing processors (CPU) or whether, since forwarding is not possible, it is initially not processed and therefore must remain stored.

2. Method according to Claim 1, characterized in that each of the processing processors (CPU0 to CPUp-1) additionally signals to the interrupt controller (UB-ST) that it is ready to accept interrupt requests.

3. Method according to Claim 1 or 2, characterized in that, when accepting an interrupt request delivered by the interrupt controller (UB-ST) and removing it from the associated queue (WS...) of the input/output system (IOS), each of the processing processors (CPU0 to CPUp-1) checks whether the respective queue (WS...) is still occupied with further requests, and in that if further requests are present, the checking processing processor (CPU...) notifies the interrupt controller (UB-ST) of this and the deleted request is consequently set again.

4. Method according to one of Claims 1 to 3, characterized in that each individual virtual machine (VM0 to VMn-1) can be marked separately (by GLM) in the interrupt controller (UB-ST) via the processing processor (CPU...) assigned in each case to the hypervisor (HPV) for the virtual machine system, and in that interrupt requests present for such a marked virtual machine are delivered as global interrupt requests by the interrupt controller (UB-ST) by transferring the interrupt class (UBK...) and the identifier (VM_{ID}) of the associated virtual machine to a selectable processing processor (CPU...) working for another virtual machine, which then forwards the notified interrupt request to the hypervisor (HPV) for a further decision.

5. Method according to Claim 4, characterized in that the separate marking (GLM) for the individual virtual machines (VM0 to VMn-1) is performed subdivided according to interrupt classes (UBK0 to UBK7) so that interrupt requests of an unmarked interrupt class (UBK...) are ignored.

6. Method according to Claim 4 or 5, characterized in that each individual virtual machine (VM0 to VMn-1) can be marked separately (by GLV) when a virtual machine (VMₓ) is assigned by the hypervisor (HPV) to a processing processor (CPUy) in the interrupt controller (UB-ST), and in that interrupt requests for such marked virtual machines lead to the interruption of the processing processor (CPU) provided with such a marking and the virtual machine (VMₓ) running on it for the purpose of forwarding the interrupt request to the hypervisor (HPV).

7. Method according to one of Claims 1 to 6, characterized in that when one of the virtual machines (VM...) is assigned to one or more of the processing processors, a further marking, which is subdivided according to interrupt classes (UBK0 to UBK7) of the input/output system (IOS) and if appropriate further request classes for other asynchronous interrupt requests given the corresponding extension of the interrupt mask, is performed in the assigned processing processors (CPU...) via the processing processor (CPU...) assigned in each case to the hypervisor (HPV) for the virtual machine system, which marking indicates an interrupt request from the hypervisor (HPV) and which is checked in each case on the basis of the interrupt mask (UM) that is assigned to the virtual machine (VM...) and can be changed by the latter, and in that the processing processor (CPU...) calls up the hypervisor (HPV) if the valid interrupt mask (UM) releases the marked interrupt request.

8. Method according to one of Claims 1 to 6, characterized in that, via the processing processor (CPU...) assigned in each case to the hypervisor (HPV) for the virtual machine system, it is possible to store in the interrupt controller (UB-ST) interrupt requests (SANF) of the hypervisor (HPV), which are subdivided according to the interrupt classes (UBK0 to UBK7) of the input/output system (IOS) and if appropriate further request classes for other asynchronous interrupt requests given corresponding extension of the interrupt mask, for each individual virtual machine (VM1 to VMn), and in that said interrupt requests, like interrupt requests of the input/output system (IOS), are checked by the interrupt controller (UB-ST) and if they can be delivered are forwarded to the processing processor (CPU...) assigned to the associated virtual machine (VM...), which processor then calls up the hypervisor (HPV).

9. Interrupt controller for a virtual machine system having a plurality of virtual machines (VM0 to VMn-1), to which an independent identifier (VM_{ID}) is assigned in each case, and comprising
- one or more processing processors (CPU0 to CPUp-1),
- an input/output system (IOS) having input/output processors (IOP...), channels (CH...) and connected input/output devices (DEV...), and
- a memory system (MS) having an area (HPV) for the hypervisor for controlling the virtual machine system, having areas (SP-VM0 to SP-VMn-1) assigned to the individual virtual machines (VM...) and having an area (SP-IOS) assigned to the input/output system,
in which a machine-specific set of queues (WS...) assigned to the individual interrupt classes (UBK0 to UBK7) is provided in the memory area (SP-IOS) of the input/output system (IOS) for each virtual machine (VM...) for storing interrupt requests of the input/output system (IOS), and interrupt requests are forwarded under mask control to the respective virtual machine (VM...), characterized
- by an independently operating central interrupt controller (UB-ST)
- having individual storage means (ANF-REG...) provided for each virtual machine (VM0 to VMn-1) for storing the interrupt requests of the input/output system (IOS) subdivided according to interrupt classes (UBK0 to UBK7), and
- having individual storage means (ID/UM-REG...) provided for each processing processor (CPU0 to CPUp-1) for storing the associated interrupt mask (UM) for the virtual machine (VM...) running on the processing processor (CPU...) in each case and its identifier (VM_{ID}),
- by means for receiving and storing the interrupt requests reported by the input/output system (IOS) in the corresponding individual storage means (ANF-REG...),
- by means for receiving and storing or deleting the information (UM, VM_{ID}) notified by the individual processing processors (CPU0 to CPUp-1) about the respective assigned virtual machine (VM...) and the associated interrupt mask (UM),
- by means for checking whether the respective interrupt requests present can be delivered on the basis of the interrupt mask (UM) of the respective associated virtual machine (VM...), and
- by means for forwarding interrupt requests that can be delivered to the respective processing processor (CPU...).

10. Interrupt controller according to Claim 9, characterized
- by means for registering the interrupt readiness notified by the individual processing processors (CPU0 to CPUp-1), and
- by means for checking whether the interrupt requests can be delivered to an interrupt-ready processing processor (CPU...).

11. Interrupt controller according to Claim 9 or 10, characterized
- by additional storage means (GLM-REG...) provided for each virtual machine (VM0 to VMn-1) for separate marking of the virtual machines (VM...) for which interrupt requests that are present are to be forwarded to a selected processing processor (CPU...) even if the latter is not assigned to the marked virtual machine (VM...),
- by means for receiving such marking notifications from one of the processing processors (CPU0 to CPUp-1) and for registering them, and
- by means for detecting interrupt requests for such marked virtual machines (VM...) and for forwarding said requests to one of the processing processors (CPU...) with specification of the identifier (VM_{ID}) of the associated virtual machine (VM...).

12. Interrupt controller according to Claim 11, characterized by individual storage means (GLM-REG...) for each virtual machine (VM0 to VMn-1) for a separate marking subdivided according to interrupt classes (UBK0 to UBK7).

13. Interrupt controller according to Claim 11 or 12, characterized by storage means (GLV-REG...) provided for each processing processor (CPU...) for identifying virtual machines (VM...) that may globally interrupt the respective processor, by means for receiving the information stored in said individual storage means (GLV-REG), and by means for taking said information into account when selecting a processing processor for the delivery of a global interrupt request.

14. Interrupt controller according to one of Claims 9 to 13, characterized
- by storage means (SANF-REG...) provided individually for each virtual machine (VM0 to VMn-1) for storing interrupt requests (SANF) which are simulated by the hypervisor (HPV) of the virtual machine system and are transferred, subdivided according to interrupt classes (UBK0 to UBK7) of the input/output system (IOS) and if appropriate further request classes for other asynchronous interrupt requests given corresponding extension of the interrupt mask, from one of the processing processors (CPU0 to CPUp-1), and
- by means for checking said storage means (SANF-REG...) for the presence of a simulated interrupt request and whether it can be delivered on the basis of the interrupt mask (UM) present to the processing processor (CPU...) assigned to the associated virtual machine (VM...).

15. Interrupt controller according to one of Claims 9 to 14, characterized in that the individual storage means comprise registers in which in each case one bit position is assigned to each interrupt class (UBK0 to UBK7) and if appropriate to each further request class or each virtual machine (VM₀ to VMn-1).

16. Interrupt controller according to one of Claims 9 to 15, characterized by means for interrogating and/or deleting interrupt requests for a predetermined virtual machine (VM...) by a processing processor (CPU..) even if it is not interrupt-ready.

## Revendications

1. Procédé de traitement de demandes d'interruption lors d'opérations d'entrée/sortie dans un système de machines virtuel comportant plusieurs machines virtuelles (VM0 à VMn-1), à chacune desquelles est associé une caractéristique (VM_{ID}) indépendante d'identité, et constitué de
- un ou plusieurs processeurs (CPU0 à CPUp-1) de traitement,
- un système (IOS) d'entrée/sortie comportant des processeurs (IOP ...) d'entrée/sortie, des canaux (CH ...) et des appareils (DEV...) d'entrée/sortie, qui leur sont connectés et
- un registre (MS) comportant une zone (HPV) pour l'hypervisor destiné à commander le système virtuel de machines, des zones (SP-VM0 à SP-VMn-1) associées aux différentes machines (VM ...) virtuelles et une zone (SP-IOS) associée au système d'entrée/sortie,
un groupe, individuel par machine, de files (WS ...) d'attente associées aux différentes classes (UBK0 à UBK7) d'interruption et destinées à la mémorisation de demandes d'interruption du système (IOS) d'entrée/sortie étant prévu pour chaque machine (VM ...) virtuelle dans la zone (SP-IOS) de mémoire du système (IOS) d'entrée/sortie et la retransmission de demandes d'interruption à la machine virtuelle (VM ...) concernée s'effectuant par commande masquée,
caractérisé en ce que, lors de l'affectation à une machine virtuelle (VM0 à VMn-1) chacun des processeurs (CPU0 à CPUp-1) de traitement communique la caractéristique (VM_{ID}) d'identité associée et lors d'un changement dans son affectation le masque (UM) destiné au traitement d'interruption d'une commande (UB-ST) centrale d'interruption, le système (IOS) d'entrée/sortie communique également, lors de l'occupation pour la première fois d'une file (WS ...) d'attente la caractéristique (VM_{ID}) d'identité caractérisant la machine (VM) virtuelle concernée et la classe (par exemple UBK7) d'interruption associée destinée à caractériser une demande d'interruption de la commande centrale d'interruption et la commande (UB-ST) d'interruption contrôle des demandes d'interruption communiquées en référence à la caractéristique (VM_{ID}) d'identité de la demande et en référence au masque (UM) d'interruption associé, pour savoir si la demande peut être retransmise directement à l'un des processeurs (CPU) de traitement ou si il faut d'abord qu'elle reste sans traitement en raison d'une impossibilité de retransmission et si il faut de ce fait qu'elle reste mémorisée.

2. Procédé suivant la revendication 1,
caractérisé en ce que chacun des processeurs (CPU0 à CPUp-1) de traitement de la commande (UB-ST) d'interruption signale en plus qu'il est prêt pour recevoir des demandes d'interruption.

3. Procédé suivant l'une des revendications 1 ou 2,
caractérisé en ce que chacun des processeurs (CPU0 à CPUp-1) de traitement contrôle, lors de la réception d'une demande d'interruption fournie par la commande (UB-ST) d'interruption et lors de sa décomposition à partir de la file (WS ...) d'attente associée du système (IOS) d'entrée/sortie, si la file (WS ...) d'attente concernée est encore occupée par d'autres demandes et, en présence d'autres demandes, le processeur (CPU ...) de traitement contrôleur communique cela à la commande (UB-ST) d'interruption et on rétablit ainsi la demande effacée.

4. Procédé suivant l'une des revendications 1 à 3,
caractérisé en ce que l'on peut marquer séparément (par GLM) chaque machine (VM0 à VMn-1) virtuelle, dans la commande (UB-ST) d'interruption par le processeur (CPU ...) de traitement associé respectivement à l'hypervisor (HPV) pour le système virtuel de machine et, pour une machine virtuelle marquée de cette manière, on envoie des demandes d'interruption présentes en tant que demandes globales d'interruption de la commande (UB-ST) d'interruption à un processeur (CPU ...) de traitement qui peut être sélectionné et qui fonctionne pour une autre machine virtuelle, par transmission de la classe (UBK ...) d'interruption et de la caractéristique (VM_{ID}) d'identité de la machine virtuelle associée, lequel processeur de traitement retransmet alors la demande d'interruption communiquée à l'hypervisor (HPV) en vue d'une décision ultérieure.

5. Procédé suivant la revendication 4,
caractérisé en ce que le marquage (GLM) séparé pour les différentes machines (VM0 à VMn-1) virtuelles s'effectue par subdivision en classes (UBK0 à UBK7) d'interruption, de sorte qu'il n'est pas tenu compte de demandes d'interruption d'une classe (UBK ...) d'interruption non marquée.

6. Procédé suivant la revendication 4 ou 5,
caractérisé en ce que, lors de l'affectation d'une machine (VMₓ) virtuelle par l'hypervisor (HPV) à un processeur (CPUy) de traitement dans la commande (UB-ST) d'interruption, on peut marquer séparément(par GLV) chaque machine (VM0 à VMn-1) virtuelle et des demandes d'interruption pour de telles machines virtuelles marquées provoquent l'interruption du processeur (CPU) de traitement muni d'une telle marque et de la machine (VMₓ) virtuelle fonctionnant avec lui dans le but de retransmettre la demande d'interruption à l'hypervisor (HPV).

7. Procédé suivant l'une des revendications 1 à 6,
caractérisé en ce que lors de l'affectation de l'une des machines virtuelles (VM ...) associées à un ou plusieurs des processeurs de traitement il s'effectue, dans les processeurs (CPU ...) de traitement associés, par l'intermédiaire du processeur (CPU ...) de traitement associé respectivement à l'hypervisor (HPV) pour le système virtuel de machines, un autre marquage, qui est subdivisé en classes (UBK0 à UBK7) d'interruption du système (IOS) d'entrée/sortie et éventuellement suivant d'autres classes d'interruption pour diverses demandes asynchrones d'interruption en cas d'extension correspondante du masque d'interruption, qui indique une demande d'interruption par l'hypervisor (HPV) et que l'on vérifie respectivement en référence au masque (UM) d'interruption associé à la machine (VM ...) virtuelle et pouvant être modifié par celle-ci, et le processeur (CPU ...) de traitement appelle l'hypervisor (HPV), lorsque le masque (UM) valable d'interruption libère la demande marquée d'interruption.

8. Procédé suivant l'une des revendications 1 à 6,
caractérisé en ce que l'on peut mémoriser pour chaque machine virtuelle (VM1 à VMn), des demandes (SANF) d'interruption subdivisées en les classes (UBK0 à UBK7) d'interruption du système (IOS) d'entrée/sortie et éventuellement en d'autres classes d'interruption pour diverses demandes asynchrones d'interruption en cas d'extension correspondante du masque d'interruption, de l'hypervisor (HPV), dans la commande (UB-ST) d'interruption par l'intermédiaire respectivement du processeur (CPU...) de traitement associé à l'hypervisor (HPV) pour le système virtuel de machine et ces demandes d'interruption sont contrôlées comme des demandes d'interruption du système (IOS) d'entrée/sortie par la commande (UB-ST) d'interruption et, on les retransmet, en cas de possibilité d'envoi, au processeur (CPU ...) de traitement associé à la machine (VM ...) virtuelle concernée, lequel appelle alors l'hypervisor (HPV).

9. Commande d'interruption pour un système virtuel de machines comportant plusieurs machines (VM0 à VMn-1) virtuelles, à chacune desquelles est associée une caractéristique (VM_{ID}) indépendante d'identité, et constitué de
- un ou plusieurs processeurs (CPU0 à CPUp-1) de traitement,
- un système (IOS) d'entrée/sortie comportant des processeurs (IOP ...) d'entrée/sortie, des canaux (CH ...) et des appareils (DEV ...) d'entrée/sortie, qui leur sont connectés et
- un registre (MS) comportant une zone (HPV) pour l'hypervisor destiné à commander le système virtuel de machines, des zones (SP-VM0 à SP-VMn-1) associées aux différentes machines (VM ...) virtuelles et une zone (SP-IOS) associée au système d'entrée/sortie,
un groupe, individuel par machine, de files (WS ...) d'attente associées aux différentes classes (UBK0 à UBK7) d'interruption et destinées à la mémorisation de demandes d'interruption du système (IOS) d'entrée/sortie étant prévu pour chaque machine (VM ...) virtuelle dans la zone (SP-IOS) de mémoire du système (IOS) d'entrée/sortie et la retransmission de demandes d'interruption à la machine virtuelle (VM ...) concernée s'effectuant par commande masquée,
caractérisée par
- une commande (UB-ST) d'interruption centrale fonctionnant indépendamment comportant
-- des moyens (ID/UM-REG ...) de mémorisation individuels prévus pour chaque processeur (CPU0 à CPUp-1) de traitement et destinés à la mémorisation du masque (UM) correspondant d'interruption pour la machine (VM ...) virtuelle fonctionnant respectivement avec le processeur (CPU ...) de traitement et à la mémorisation de sa caractéristique (VMID) d'identité, et
-- des moyens (ANF-REG ...) de mémorisation individuels prévus pour chaque machine (VM0 à VMn-1) virtuelle et destinés à la mémorisation des demandes d'interruption, subdivisées en classes (UBK0 à UBK7) d'interruption, du système (IOS) d'entrée/sortie
- des moyens de réception et de mémorisation des demandes d'interruption communiquées par le système (IOS) d'entrée/sortie dans les moyens (ANF-REG...) individuels correspondants,
- des moyens de réception et de mémorisation ou d'effacement des données (UM, VM_{ID}) communiquées par les différents processeurs (CPU0 à CPUp-1) de traitement et concernant la machine (VM ...) virtuelle associée et le masque (UM) d'interruption concerné,
- des moyens pour contrôler les demandes d'interruption présentes en référence au masque (UM) d'interruption de la machine (VM ...) virtuelle associée en ce qui concerne leur possibilité d'envoi et
- des moyens de retransmission au processeur (CPU ...) de traitement concerné, de demandes d'interruption susceptibles d'être envoyées.

10. Commande d'interruption suivant la revendication 9, caractérisée par
- des moyens d'enregistrement des états prêts pour une interruption communiqués par les différents processeurs (CPU0 à CPUp-1) de traitement et
- des moyens de contrôle des demandes d'interruption en ce qui concerne leur possibilité d'envoi à un processeur (CPU ...) de traitement prêt pour une interruption.

11. Commande d'interruption suivant la revendication 9 ou 10, caractérisé par
- des moyens (GLM-REG ...) individuels supplémentaires prévus pour chaque machine (VM0 à VMn-1) virtuelle et destinés au marquage séparé des machines (VM ...) virtuelles pour lesquelles il faut retransmettre des demandes d'interruption présentes à un processeur (CPU ...) de traitement sélectionné, même lorsque celui-ci n'est pas affecté à la machine (VM ...) virtuelle marquée,
- des moyens pour recevoir de telles communications de marquage par l'un des processeurs (CPU0 à CPUp-1) de traitement et pour les enregistrer et
- des moyens pour déterminer des demandes d'interruption destinées à des machines (VM ...) virtuelles marquées de cette façon et pour retransmettre ces demandes à l'un des processeurs (CPU ...) de traitement en donnant la caractéristique (VM_{ID}) d'identité de la machine (VM ...) virtuelle associée.

12. Commande d'interruption suivant la revendication 11, caractérisée par des moyens (GLM-REG ...) de mémorisation pour chaque machine (VM0 à VMn-1) virtuelle pour un marquage séparé subdivisé en classes (UBK0 à UBK7) d'interruption.

13. Commande d'interruption suivant la revendication 11 ou 12, caractérisée par des moyens (GLV-REG ...) de mémorisation prévus pour chaque processeur (CPU ...) de traitement destinés à la caractérisation de machines (VM ...) virtuelles, qui sont autorisés à interrompre globalement le processeur concerné, par des moyens de réception de l'information mémorisée dans ces moyens (GLV-REG) individuels de mémorisation et par des moyens pour faire intervenir cette information lors de la sélection d'un processeur de traitement pour l'envoi d'une demande d'interruption globale.

14. Commande d'interruption suivant l'une des revendications 9 à 13, caractérisée par
- des moyens (SANF-REG ...) de mémorisation prévus individuellement pour chaque machine (VM0 à VMn-1) virtuelle et destinés à la mémorisation de demandes (SANF) d'interruption, simulées par l'hypervisor (HVP) du système virtuel de machines, transmises par l'un des processeurs (CPU0 à CPUp-1) de traitement et subdivisées en classes (UBK0 à UBK7) d'interruption du système (IOS) d'entrée/sortie et éventuellement en d'autres classes d'interruption pour diverses demandes asynchrones d'interruption en cas d'extension correspondante du masque d'interruption et
- des moyens pour contrôler ces moyens (SANF-REG ...) de mémorisation en ce qui concerne la présence d'une demande simulée d'interruption et en ce qui concerne sa possibilité d'envoi en référence au masque (UM) d'interruption présent au processeur (CPU ...) de traitement associé à la machine (VM ...) virtuelle concernée.

15. Commande d'interruption suivant l'une des revendications 9 à 14 caractérisée en ce que les différents moyens de mémorisation sont constitués de registres, dans lesquels une position binaire est associée respectivement à chaque classe (UBK0 à UBK7) d'interruption et éventuellement à chaque autre classe d'interruption ou à chaque machine (VM0 à VMn-1) virtuelle.

16. Commande d'interruption suivant l'une des revendications 9 à 15, caractérisée par des moyens d'interrogation et/ou d'effacement de demandes d'interruption destinées à une machine (VM ...) virtuelle prescrite par un processeur (CP ...) de traitement, même lorsque celui-ci n'est pas prêt pour une interruption.
